(19) **Europäisches Patentamt**
**European Patent Office**
**Office européen des brevets**

(11) **EP 3 735 132 B1**

(12) **EUROPEAN PATENT SPECIFICATION**

(45) Date of publication and mention
of the grant of the patent:
**20.04.2022  Bulletin 2022/16**

(21) Application number: **19700024.3**

(22) Date of filing: **03.01.2019**

(51) International Patent Classification (IPC):
*A23J 1/00* *(2006.01)*     *A23J 1/20* *(2006.01)*
*A23L 15/00* *(2016.01)*    *A23L 33/185* *(2016.01)*
*A23L 33/19* *(2016.01)*

(52) Cooperative Patent Classification (CPC):
**A23L 15/35; A23J 1/14; A23J 3/08; A23J 3/10;**
**A23J 3/14; A23L 33/185; A23L 33/19**

(86) International application number:
**PCT/EP2019/050087**

(87) International publication number:
**WO 2019/134934 (11.07.2019 Gazette 2019/28)**

(54) **FOAM COMPRISING RAPESEED AND DAIRY PROTEINS**

SCHAUM MIT RAPS- UND MILCHPROTEINEN

MOUSSE COMPRENANT DU COLZA ET DES PROTÉINES LAITIÈRES

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **05.01.2018  EP 18150470**

(43) Date of publication of application:
**11.11.2020  Bulletin 2020/46**

(73) Proprietor: **DSM IP Assets B.V.**
**6411 TE  Heerlen (NL)**

(72) Inventor: **SHI, Jing**
**6100 AA Echt (NL)**

(74) Representative: **DSM Intellectual Property**
**P.O. Box 4**
**6100 AA Echt (NL)**

(56) References cited:
**US-A1- 2007 098 876     US-A1- 2017 027 190**

• **JANITHA P.D. WANASUNDARA ET AL:**
**"Canola/rapeseed protein-functionality and**
**nutrition", OCL, vol. 23, no. 4, 1 July 2016**
**(2016-07-01), page D407, XP055304289, ISSN:**
**2272-6977, DOI: 10.1051/ocl/2016028 cited in the**
**application**

**Description**

**Field of the invention**

The present invention is directed to a foam comprising rapeseed protein isolate, a second protein selected from the group consisting of whey protein, casein or milk and water and a process for making the foam. Also disclosed are the use of the foam in food products and food products comprising the foam.

**Background of the invention**

Foam is defined as air bubbles trapped in for example a liquid. A foam is created by incorporating air, usually by beating the liquid, and capturing the air in tiny bubbles. Egg white is excellent in foam formation. Egg whites are about 90% water. The other 10% is primarily proteins, with a few vitamins, minerals, and glucose mixed in.

Egg white, when beaten becomes foamy, increases 6 to 8 times in volume and stands in peaks. On heating the foam, the air cells expand and the egg protein coagulates around them, giving permanence to the foam. Egg white foam is responsible for the structure of angel food cake, meringues, puffy omelets, and soufflés. It is known that the presence of fat inhibits the foaming of egg whites. Furthermore, adding an acid ingredient may help to stabilize egg white foam. The most commonly used acid ingredient is cream of tartar although some recipes call for lemon juice or vinegar. For under-beaten egg whites, the volume of the finished product will be less than desired. Over-beaten whites form clumps which are difficult to blend with other ingredients. Because over-beaten egg whites also lack elasticity, they cannot expand properly when heated. The finished product may be dry or have poor volume, or may even collapse.

The whipping action denatures (unfolds) the proteins and incorporates air into the whites. Denaturing the proteins exposes hydrophilic (water loving) and hydrophobic (water fearing) sections. The hydrophobic parts of proteins orient themselves around the incorporated air. This forms a protective lining around the air bubbles so they don't coagulate. A foam gets stiffer the longer it is whipped, unless it is over-beaten. As time progresses, air bubbles are divided into smaller, more numerous bubbles. Depending on how long the egg whites are beaten, a foam can be classified as soft, firm, or stiff.

Sugar thickens the egg white mixture. This increases the time it takes to foam because the mix does not spread into thin walls around bubbles easily. But sugar does add stability to the foam. It makes for a less delicate foam and keeps water from draining out during heating. For these reasons sugar is often added after a foam has been created.

Salt increases the whipping time and decreases the stability of the foam. This is because salt dissolves into positive and negative ions. These ions bond with proteins, which disrupts the foam from forming. To protect the foam, salt is normally added after the whites have been beaten to the foamy stage.

Acids (vinegar, lemon juice, cream of tartar, etc.) are also added after the foamy stage has been reached because they delay foam formation. Acids are useful because they stabilize the foam. Acids decrease the pH, which reduces the ability of the proteins to coagulate.

However, the use of egg protein is often undesirable. For example, due to problems with egg allergies, medical problems associated with cholesterol levels in eggs, religious restrictions/convictions, culinary preferences (such as, for example, a vegetarian or a vegan diet), cost fluctuations in the price of eggs, use of antibiotics and hormones in poultry production, and diseases associated with poultry, the use of alternative proteins may be desired.

The use of vegetable based proteins as an alternative protein is known, for example WO 2008/094434 discloses the use of wheat protein isolates as an alternative to the use of egg yolk protein in compositions. However, the use of wheat protein isolates may not be desirable for those with gluten allergies and there may also be intolerances to soy based proteins and egg white based proteins. There is therefore a need to find to find a suitable vegetable based protein that can be used to replace egg white and yet maintain the required texture, flavor, and stability. Soy protein is widely used, however in view of some intolerances to soy products there is a need to find other sources of vegetable proteins.

Suitable alternatives include pea protein and rapeseed protein. Rapeseed is rich in oil and contains considerable amounts of protein that account for 17-25% of seed dry weight. Processing rapeseed for oil for human consumption produces rapeseed meal (60%) as a by-product containing 30-40% protein. The rapeseed used is usually of the varieties *Brassica napus* and *Brassica juncea.* These varieties contain only low levels of erucic acid and glucosinolate, and are also known as canola. Canola is a contraction of Canada and ola, for "oil low acid", but is now a generic term defined as rapeseed oil comprising <2% erucic acid and <30 mmol/g glucosinolate. The resultant rapeseed meal is currently used as a high-protein animal feed.

Proteins are available as hydrolysates, concentrates and isolates. Hydrolysates are proteins that have been partially broken down by exposing the protein to heat, acid or enzymes that break apart the bonds linking amino acids. This makes it taste more bitter, but also allows it to be absorbed more rapidly during digestion than a native (non-hydrolyzed) protein. Rapeseed protein isolates are purer than concentrates, meaning other non-protein components have been partially removed to "isolate" the protein. Many concentrates are around 80% protein, which means that on a dry basis, 80% of the total weight is protein. Isolates are typically around 90% protein (dry basis). This is calculated using the Kjeldahl method.

The predominant storage proteins found in rapeseed are cruciferins and napins. Cruciferins are globulins and are the major storage protein in the seed. It is composed of 6 subunits and has a total molecular weight of approximately 300 kDa. Napins are albumins and are a low molecular weight storage protein with a molecular weight of approximately 14 kDa.

Rapeseed proteins can also be divided into various fractions according to the corresponding sedimentation coefficient in Svedberg units (S). This coefficient indicates the speed of sedimentation of a macromolecule in a centrifugal field. For rapeseed proteins, the main reported fractions are 12S, 7S and 2S. Cruciferin and napin are the two major families of storage proteins found in canola/rapeseed. Napin is a 2S albumin, and cruciferin is a 12S globulin. Furthermore, Schwenke and Linow (Nahrung (1982) 26, K5-K6) state that reversible dissociation of the 12S globulin from rapeseed (*Brassica napus L.*) depends on ionic strength. The cruciferin complex is present as a 300 kDa 12S hexamer when exposed to higher ionic strength ($\mu \geq 0.5$ mS/cm), and reversibly dissociates into 7S trimeric molecules of 150 kDa when exposed to low ionic strength conditions.

Napins are more easily solubilized and in for example EP 1715752B1 a process is disclosed to separate out the more soluble napin fraction, preferably to at least 85 wt.%. Napins are primarily proposed for use in applications where solubility is key. In US 2007/0098876 a rapeseed protein isolate is disclosed having a protein content of at least 90 wt.% and exhibiting a protein profile which is 60 to 95 wt.% of 2S proteins (napins) and about 5 to 40 wt.% of 7S. The use of rapeseed protein isolates in food products as such is described in *e.g.* US 2017/027190 and Janitha et al. (OCL (2016) 23, D407).

Addition of rapeseed protein isolates to egg white in whipping applications was first suggested by Kodagoda et al. (Can. Inst. Food Sci. Technol. J. (1973) 6, 266-269). However, the suggested amounts of rapeseed protein isolates (3%) are only small compared to the bulk of the egg white, which hardly qualifies as a significant alternative for the use of egg white. Moreover, the results were unfavorable as a decreased specific volume was observed. Only in one case an improved specific volume was observed, however this required the rapeseed protein isolate to be obtained using a specific hydrogen chloride extraction process, on top of the already complex three stage extraction process of Kodagoda et al. (Can. Inst. Food Sci. Technol. J. (1973) 6, 135-141) used to prepare the rapeseed protein isolates. But more importantly, it is desirable to replace egg white protein altogether.

EP 1389921B1 discloses a process of forming a food composition, which comprises extracting rapeseed oil seed meal with an aqueous food-grade salt solution at a temperature of at least 5°C to cause solubilizing of protein in the rapeseed oil seed meal and to form an aqueous protein solution having a protein content of 5 to 30 g/l and a pH of 5 to 6.8, and subsequently the protein is extracted via micelles/fractionating. This is done to improve solubility as the 12S fraction is usually considered as less soluble in the presence of low salt levels and over wide pH ranges. The resultant rapeseed protein isolate is incorporated in said food composition in substitution for egg white, milk protein, whole egg, meat fibers, or gelatin, however not in foams. In Pudel et al. (Lipid Technology (2015) 27, 112-114) a process is disclosed for separating a rapeseed protein isolate into pure (>95%) cruciferin and pure (>98%) napin. Following this complex purification procedure, a remainder of a protein mixture is obtained comprising 43-44% cruciferin and 56-57% napin. The solubility of this mixture is relatively low with 75% at pH 7 measured according to Morr et al. (J. Food Sci. (1985) 50, 1715-1718). All purified fractions as such are whipped to a foam from a highly diluted (3%) solution, however not in combination with egg white. Although US 2007/0098876 reports the preparation of foams from a 5% rapeseed protein solution, the suggestion to go to slightly higher concentrations is only made for compositions comprising both high amounts of soluble 2S proteins (60 to 95 wt.%) and of 2S proteins (napins) and dissociated cruciferins, 7S proteins (5 to 40 wt.%).

There remains a need for processes that are less complex and have higher yields and still yield rapeseed protein isolates that perform well as replacement for egg protein, alone or combined with other proteins.

It has been found that the more elaborate processes for producing rapeseed protein isolate as advocated in the abovementioned prior art are not necessary to obtain a product that is well suited as foaming agent. The rapeseed protein isolate used in the present invention is obtained by a process without the need to separate out the protein constituents and yet a solubility across a broader pH range can be maintained, a solubility that is even higher than reported in the prior art. As a result, the process used to prepare rapeseed protein isolate as starting material for the present invention is more economically viable than prior art processes.

It has been found that the resulting high purity rapeseed protein isolate not only has good foaming capacity and stability alone, but also when combined with dairy-based proteins such as whey protein, casein protein or milk protein. Surprisingly, with either whey protein or milk protein even unexpected synergistic effects are observed. The ability to utilize a protein which is vegetable in origin in food products enables truly vegetarian food products to be provided in instances where egg white and/or animal-derived protein have been used in the absence of any available substitute.

It has therefore been found that the use of soluble native rapeseed protein isolate comprising both cruciferins and napins, obtained from cold pressed oilseed meal and extracted under mild conditions gave surprisingly good results when used to replace egg white in foams.

## Detailed description of the invention

In a first aspect of the present invention, there is provided a foam comprising:

i) 80 to 95 wt.% of water, and

ii) 1 to 20 wt.% native rapeseed protein isolate comprising 40 to 65 wt.% cruciferins and 35 to 60 wt.% napins and having a solubility of at least 88% over a pH range from 3 to 10 at a temperature of 23±2°C,

iii) a second protein selected from the group consisting of whey protein, casein or milk protein, isolates of any thereof, concentrates of any thereof and combinations of any thereof, wherein the ratio between said rapeseed protein isolate and said second protein is from 95:5 (w:w) to 5:95 (w:w), wherein i) + ii) + iii) add up to 100 wt.% or less.

In one embodiment, it was found that optimal results in terms of solubility and foaming capacity were obtained when the wt.% of cruciferins and napins are approximately equal. Hence, preferably 42 to 60 wt.% cruciferins and 40 to 58 wt.% napins, more preferably 45 to 60 wt.% cruciferins and 40 to 55 wt.% napins, most preferably 47 to 55 wt.% cruciferins and 45 to 53 wt.% napins. With the proviso that the combined wt.% of both cruciferin and napin do not exceed 100%.

Preferably the native rapeseed protein isolate has a solubility of at least 88%, more preferably at least 90%, more preferably at least 92%, still more preferably of at least 94% and still more preferably of at least 96% when measured over a pH range from 3 to 10 at a temperature of 23±2°C. This is also known as the soluble solids index (SSI), as described by Morr et al. (J. Food Sci. (1985) 50, 1715-1718) and modified as per the Test Method' section of the instant invention.

For use in human food consumption the native rapeseed protein isolate preferably comprises a low level of salt, the amount of which can be determined by measuring conductivity. Preferably the conductivity of the native rapeseed protein isolate in a 2 wt.% aqueous solution is less than 9000 $\mu$S/cm over a pH range of 2 to 12. More preferably the conductivity of the native rapeseed protein isolate in a 2 wt.% aqueous solution is less than 4000 $\mu$S/cm over a pH range of 2.5 to 11.5. For comparison, the conductivity of a 5g/l aqueous sodium chloride solution is around 9400 $\mu$S/cm.

Preferably the native rapeseed protein isolate has a phytate level of less than 0.4 wt.%, more preferably less than 0.25 wt.% and most preferably less than 0.15 wt.%. Addition of phytate to rapeseed protein isolates was observed to have negative effects on solubility and foaming properties as reported by Kroll (Die Nahrung (1991) 35, 619-624).

Preferably the native rapeseed protein isolate has a protein content of at least 90 wt.% (calculated as Kjeldahl N × 6.25) on a dry weight basis, more preferably at least 94 wt.%, most preferably at least 96 wt.% and especially at least 98 wt.%.

The water (i) should be water suitable for human consumption. Preferably the foam comprises 15 to 50 wt.% of water and more preferably 15 to 30 wt.% of water.

The foam comprises, in addition to the rapeseed protein isolate (ii) a second protein (iii) selected from the group consisting of whey protein, casein or milk protein, isolates of any thereof, concentrates of any thereof and combinations of any thereof.

Preferably the total protein used (ii) + (iii) comprises at least 5%, more preferably at least 33% and most preferably at least 50% of rapeseed protein isolate.

Surprisingly it was found that a combination of rapeseed protein isolate and a second protein that is either whey protein isolate or skim milk powder resulted in a more stable foam than the use of either alone, indicating a synergistic effect. This applies to the full range of combinations such as, for example, a ratio of rapeseed protein isolate to whey protein isolate or skim milk powder of 93.3:6.7 (w:w) to 6.7:93.3 (w:w) or of 66.7:33.3 (w:w) to 33.3:66.7 (w:w). Additionally, it was found that a combination of rapeseed protein isolate and a second protein that is either whey protein isolate or skim milk powder resulted in a foam with a foam capacity that is higher than the use of either alone, also indicating a synergistic effect. This applies to a significant part of the combinations such as, for example, a ratio of rapeseed protein isolate to whey protein isolate of 66.7:33.3 (w:w) to 6.7:93.3 (w:w) or a ratio of rapeseed protein isolate to skim milk powder of 50:50 (w:w) to 6.7:93.3 (w:w). Therefore, in a most preferred embodiment there is provided a foam according to the invention comprising rapeseed protein isolate and whey protein isolate or skim milk powder in a ratio in the range of from 95:5 (w:w) to 5:95 (w:w), more preferably of from 93.3:6.7 (w:w) to 6.7:93.3 (w:w), most preferably of from 66.7:33.3 (w:w) to 33.3:66.7 (w:w). The resultant combination has a foaming stability that is higher than the theoretical foaming stability obtained by calculating the average of the foaming stabilities of the individual components. A similar, but less pronounced effect, is observed for the foaming capacity of the combinations of the invention. Additionally, in several cases foaming stabilities higher than, or equal to, those of rapeseed protein isolate alone, whey protein alone or skim milk powder alone are obtained. This is the case for foams comprising rapeseed protein isolate and whey protein isolate in a ratio of from 93.3:6.7 (w:w) to 66.7:33.3 (w:w) and for foams comprising rapeseed protein isolate and skim milk powder in a ratio of from 93.3:6.7 (w:w) to 33.3:66.7 (w:w).

The foam of the present disclosure may further comprise other ingredients, such as, for example, food starches, sweeteners, spices, seasonings (including salt), food pieces, stabilizers, antioxidants, sterols, soluble fiber, gums, flavorings, preservatives, colorants, and various combinations of any thereof. The foam may be prepared using processes well known in the art.

The rapeseed protein isolate is produced from rapeseed press meal (also referred to as cake), the by-product of rapeseed oil production, for example as described in WO 2017/102535. Preferably the native rapeseed protein isolate is substantially un-hydrolyzed. By substantially un-hydrolyzed is meant that the protein is not deliberately hydrolyzed. Preferably the rapeseed protein isolate is obtained in a process where the levels of napin and cruciferin are kept substantially constant (*i.e.* neither the napin or cruciferin levels are deliberately increased). Preferably the rapeseed protein isolate is obtained in a process without a fractionating step.

The process starts with an extraction step, in which rapeseed meal (preferably cold-pressed rapeseed oil seed meal) is mixed with an aqueous salt solution, for example 0 to 5% sodium chloride, at a temperature between 4 to 75°C, more preferably 20 to 75°C and most preferably 40 to 75°C. Preferably the meal to water ratio is in the range of from 1:5 to 1:20. After a period in the range of from 5 min to 2 hours, preferably 30 minutes to 1 hour, the protein rich solution (extract) is separated from the insoluble material. The protein rich solution is hereafter referred to as the extract. The pH of the extract is adjusted and the extract is further processed to clarify the material and remove non-protein substances. The residual fat and formed precipitates are removed via a solid/liquid separation step (*e.g.* a membrane filter press or centrifugation). The extract is then concentrated and washed in an ultrafiltration/diafiltration (UF/DF) step. The UF/DF step has the purpose of concentrating the protein and removing anti-nutritional factors (*e.g.* polyphenols, residual phytate, glucosinolates). Finally, the washed concentrate may be dried in a suitable dryer, such as a spray drier (single or multistage) with an inlet temperature in the range of from 150 to 200°C and an outlet temperature in the range of from 50 to 100°C resulting in the rapeseed protein isolate.

In a second aspect of the present invention there is provided a process for obtaining a foam comprising:

i) 80 to 95 wt.% of water, and

ii) 1 to 20 wt.% native rapeseed protein isolate comprising 40 to 65 wt.% cruciferins and 35 to 60 wt.% napins and having a solubility of at least 88% over a pH range from 3 to 10 at a temperature of 23±2°C,

iii) a second protein selected from the group consisting of whey protein, casein or milk protein, isolates of any thereof, concentrates of any thereof and combinations of any thereof,

wherein i) + ii) + iii) add up to 100 wt.% or less, comprising:

a) mixing the rapeseed protein isolate with water to form a paste:

b) adding water to the paste obtained in step a);

c) adding before, after or during step b) a second protein selected from the group consisting of whey protein, casein or milk protein, isolates of any thereof, concentrates of any thereof and combinations of any thereof,

d) whipping the mixture obtained in step c) into a foam.

In another embodiment, the pH of the mixture mentioned under c) above is adjusted to neutral, *i.e.* to pH 7.0±1.0, preferably to pH 7.0±0.5, most preferably to pH 7.0±0.3 by the addition of acid or base.

In a third aspect of the invention there is also provided the use of a foam according to the invention in food products and food product comprising a foam according the invention. Hence, the foaming properties of egg white and milk protein to provide a suitable aerated structure, used in such products as nougats, macaroons, and meringues, may be reproduced by utilization of the rapeseed protein isolate in combination with whey protein, casein, or milk protein. Also provided is a food product comprising a foam according to the first aspect of the invention, *i.e.* a foam comprising:

i) 80 to 95 wt.% of water, and

ii) 1 to 20 wt.% native rapeseed protein isolate comprising 40 to 65 wt.% cruciferins and 35 to 60 wt.% napins and having a solubility of at least 90% over a pH range from 3 to 10 at a temperature of 23±2°C,

iii) a second protein selected from the group consisting of whey protein, casein or milk protein, isolates of any thereof, concentrates of any thereof and combinations of any thereof, wherein the ratio between said rapeseed protein isolate and said second protein is from 95:5 (w:w) to 5:95 (w:w), wherein i) + ii) + iii) add up to 100 wt.% or less.

Non-limiting Examples and comparative examples of the invention are described below.

## EXAMPLES

### Test methods

Protein content

Protein content was determined by the Kjeldahl method according to AOAC Official Method 991.20 Nitrogen (Total) in Milk, using a conversion factor of 6.25 to determine the amount of protein (% (w/w)).

Conductivity

The conductivity of native rapeseed protein isolate in a 2 wt.% aqueous solution was measured using a conductivity meter: Hach senslON+ EC71.

Solubility test

The below solubility test is adapted from Morr et al. (J. Food Sci. (1985) 50, 1715-1718), the difference being the use of water instead of 0.1M sodium chloride.

Sufficient protein powder to supply 0.8 g of protein was weighed into a beaker. A small amount of demineralized water was added to the powder and the mixture was stirred until a smooth paste was formed. Additional demineralized water was then added to make a total weight of 40 g, yielding a 2% w/w protein dispersion which was slowly stirred for at least 30 min using a magnetic stirrer. Afterwards the pH was adjusted to the desired level (2, 3, etc.) with sodium hydroxide or hydrochloric acid. The pH of the dispersion was measured and corrected periodically for 60 minutes stirring. After 60 minutes of stirring, an aliquot of the dispersion was reserved for protein content determination (Kjeldahl analysis). Another portion of the sample was centrifuged at 20,000 G for 2 minutes. The supernatant and pellet were separated after centrifugation. The protein content of the supernatant was also determined by Kjeldahl analysis.

$$\text{Protein solubility (\%)} = (\text{protein in supernatant} / \text{protein in total dispersion}) \times 100.$$

Alternative methods for determining solubility are available and in some case buffers, like borate-phosphate buffer in WO 2011/057408, are used. However, such values are incomparable with the ones obtained in the instant application that are determined in the absence of buffer.

### Comparative Example 1

### Whey protein foam

All ingredients were at ambient temperature ($23\pm2$°C) and quantities are shown in Table 1 below. Sufficient whey protein isolate (WPI, available from Hilmar) to supply 19.25 g of product was weighed into a 250 $cm^3$ beaker. A small amount of tap water was added to the powder and the mixture was stirred until a smooth paste formed. Additional tap water was then added to make a total weight of 175 g (yielding a 11% suspension). The mixture was slowly stirred for at least 30 min using a magnetic stirrer. Afterwards the pH was determined, and adjusted to neutral (~pH 6.8) with sodium hydroxide or hydrochloric acid. The pH of the mixture was corrected periodically to ~pH 6.8 during 60 minutes of stirring. Protein mixture (150 $cm^3$) was transferred into a mixer bowl of the Hobart mixer and was whipped at gear 3 for 240 seconds. After whipping, the foam surface was smoothed in the mixer bowl. The distance between the surface of foam and edge of mixer bowl was measured eight times by a ruler. The foam volume was calculated by means of a conversion of the average distance (mm) to volume ($cm^3$). After that, foam was transferred to a 1 L plastic container and the surface was smoothed (if too much foam was generated, only the amount of foam which was sufficient to fill the container was transferred). The weight of the foam in the container was measured. The drainage (liquid part) on the bottom of the container was collected and measured after 60 minutes using a pipette (the 60 minutes countdown was started as soon as the whipping was stopped).

- $$\text{Foam capacity (\%)} = (V_f/Vl_0) \times 100\%, \text{ in which } V_f = \text{foam volume (cm}^3) \text{ and } Vl_0 = \text{liquid volume at time } t = 0 \ (150 \ \text{cm}^3).$$

- 

Foam stability (%) = (($W_0$ – $W_t$)/$W_0$) x 100%, in which $W_0$ = weight of foam in 1 L plastic container at time t = 0 (g; $W_t$ = drain liquid weight after t = 60 min (g).

The resultant foam had a capacity of 580% and stability of 27%.

Table 1

| Ingredient | Dosage | Product concentration in final mixture |
|---|---|---|
| WPI | 19.25 g | 11.0% |
| Water | 155.75 g | |

## Comparative Example 2

### Skim milk foam

Comparative example 1 was repeated, but with a skim milk powder (SMP) available from Friesland Campina) instead of whey protein using the quantities described in Table 2 below. The resultant foam had a capacity of 338% and stability of 34%.

Table 2

| Ingredient | Dosage | Product concentration in final mixture |
|---|---|---|
| SMP | 19.25 g | 11.0% |
| Water | 155.75 g | |

## Example 1

### Preparation of rapeseed protein isolate (RPI)

The RPI was produced from cold-pressed rapeseed oil seed meal having an oil content of less than 15% on dry matter basis, cleaned and processed below 75°C.

In the extraction step, the cold-pressed rapeseed oil seed meal was mixed with an aqueous salt solution (1 to 5% sodium chloride), at a temperature between 40 to 75°C. The meal to aqueous salt solution ratio was in the range of from 1:5 to 1:20. After about 30 minutes to 1 hour the protein rich solution (extract) was separated from the insoluble material. The pH of the extract was adjusted to neutral and the extract was further processed to clarify the material and remove non-protein substances.

In the decreaming step, the residual fat was removed via a liquid/liquid separation step using centrifugation. Non-protein substances were removed by adjusting the pH of the material to neutral in the presence of a salt with which phytate precipitates (*e.g.* calcium chloride). The formed precipitate is removed via a solid/liquid separation step (*e.g.* a membrane filter press or centrifugation) in which the impurities are removed in a solid salt form (*e.g.* calcium phytate). The extract was then concentrated and washed in an ultrafiltration/diafiltration (UF/DF) step. Finally, the washed concentrate was dried in a spray drier with an inlet temperature in the range of from 150 to 200°C and an outlet temperature in the range of from 50 to 100°C resulting in the rapeseed protein isolate. Several batches were prepared and tested.

The conductivity of the resultant native rapeseed protein isolates in a 2% solution was less than 4000 $\mu$S/cm over a pH range of 2.5 to 11.5.

The resultant native rapeseed protein isolate comprised in the range of from 40 to 65% cruciferins and 35 to 60% napins.

The resultant native rapeseed protein isolate contained less than 0.26 wt.% phytate.

The resultant native rapeseed protein isolates had a solubility of at least 88% when measured over a pH range from 3 to 10 at a temperature of 23±2°C as shown for two batches in Table 3.

Table 3

| pH | 3 | 4 | 5 | 6 | 7 | 8 | 9 | 10 |
|---|---|---|---|---|---|---|---|---|
| Sample 1 Solubility (%) | 98 | 96 | 89 | 95 | 95 | 97 | 97 | 98 |
| Sample 2 Solubility (%) | 102.5 | 97.5 | 94.3 | 93.9 | 97.0 | 93.0 | 94.0 | 99.8 |

## Example 2

### Soluble RPI foam

Comparative example 1 was repeated but with a native RPI according to the invention comprising 40 to 65 wt.% cruciferins and 35 to 60 wt.% napins and having a solubility of at least 90% over a pH range from 3 to 10 at a temperature of $23\pm2°C$, and a conductivity in a 2 wt.% aqueous solution of less than 9000 μS/cm over a pH range of 2 to 12; instead of whey protein, using the quantities described in Table 4 below. The resultant foam had a capacity of 1920-1950% and stability of 87-88%.

Table 4

| Ingredient | Dosage | Product concentration in final mixture |
|---|---|---|
| RPI | 19.25 g | 11% |
| Water | 155.75 g | |

## Example 3

### Soluble RPI plus whey protein foam

Comparative example 1 was repeated but with various ratios of RPI and WPI using the quantities described in Tables 5 and 6 below. The resultant foam capacity and stability were also shown in Tables 5 and 6, respectively. Theoretical foam capacity and stability were calculated assuming no interaction between RPI foam and whey protein foam. For example, theoretical foam capacity of 50% RPI with 50% WPI = 50%*1946% (100% RPI foam capacity) + 50%*580% (100% WPI foam capacity) = 1263%. Both foaming capacity and stability of the mixture of RPI and WPI were higher than that stabilized by RPI or WPI alone, therefore demonstrating a synergistic effect.

Table 5 Foam capacity

| RPI and WPI ratio in final mixture | Concentration in final mixture | | Foam capacity | |
|---|---|---|---|---|
| | RPI | WPI | Measured | Theoretical |
| 100% RPI | 11% | 0 | 1946% | 1946% |
| 93.3% RPI, 6.7% WPI | 10.263% | 0.737% | 1742% | 1855% |
| 85% RPI, 15% WPI | 9.35% | 1.65% | 1734% | 1741% |
| 67% RPI, 33% WPI | 7.37% | 3.63% | 1565% | 1491% |
| 50% RPI, 50% WPI | 5.5% | 5.5% | 1451% | 1263% |
| 33% RPI, 67% WPI | 3.63% | 7.37% | 1320% | 1036% |
| 6.7% RPI, 93.3% WPI | 0.737% | 10.263% | 901% | 671% |
| 100% WPI | 0 | 11% | 580% | 580% |

Table 6 Foam stability

| RPI and WPI ratio in final mixture | Concentration in final mixture | | Foam stability | |
|---|---|---|---|---|
| | RPI | WPI | Measured | Theoretical |
| 100% RPI | 11% | 0 | 87.06% | 87.06% |

(continued)

| RPI and WPI ratio in final mixture | Concentration in final mixture | | Foam stability | |
|---|---|---|---|---|
| | RPI | WPI | Measured | Theoretical |
| 93.3% RPI, 6.7% WPI | 10.263% | 0.737% | 90.19% | 83.06% |
| 85% RPI, 15% WPI | 9.35% | 1.65% | 94.65% | 78.05% |
| 67% RPI, 33% WPI | 7.37% | 3.63% | 93.30% | 67.04% |
| 50% RPI, 50% WPI | 5.5% | 5.5% | 83.92% | 57.04% |
| 33% RPI, 67% WPI | 3.63% | 7.37% | 63.24% | 47.03% |
| 6.7% RPI, 93.3% WPI | 0.737% | 10.263% | 32.66% | 31.02% |
| 100% WPI | 0 | 11% | 27.02% | 27.02% |

## Example 4

**Soluble RPI plus skim milk foam**

Comparative example 1 was repeated but with various ratios of RPI and skim milk powder (SMP) using the quantities described in Tables 7 and 8 below. The resultant foam capacity and stability were also shown in Tables 7 and 8, respectively. Theoretical foam capacity and stability were calculated assuming no interaction between RPI foam and skim milk foam. For example, theoretical foam capacity of 50% RPI with 50% SMP = 50%*1924% (100% RPI foam capacity) + 50%*338% (100% SMP foam capacity) = 1131%. Both foaming capacity and stability of the mixture of RPI and SMP were higher than that stabilized by RPI or SMP alone, therefore demonstrating a synergistic effect.

Table 7 Foam capacity

| RPI and SMP ratio in final mixture | Concentration in final mixture | | Foam capacity | |
|---|---|---|---|---|
| | RPI | SMP | Measured | Theoretical |
| 100% RPI | 11% | 0 | 1924% | 1924% |
| 93.3% RPI, 6.7% SMP | 10.263% | 0.737% | 1557% | 1819% |
| 67% RPI, 33% SMP | 7.37% | 3.63% | 1157% | 1396% |
| 50% RPI, 50% SMP | 5.5% | 5.5% | 1203% | 1131% |
| 33% RPI, 67% SMP | 3.63% | 7.37% | 1157% | 867% |
| 6.7% RPI, 93.3% SMP | 0.737% | 10.263% | 545% | 444% |
| 100% SMP | 0 | 11% | 338% | 338% |

Table 8 Foam stability

| RPI and SMP ratio in final mixture | Concentration in final mixture | | Foam stability | |
|---|---|---|---|---|
| | RPI | SMP | Measured | Theoretical |
| 100% RPI | 11% | 0 | 88.07% | 88.07% |
| 93.3% RPI, 6.7% SMP | 10.263% | 0.737% | 91.80% | 84.44% |
| 67% RPI, 33% SMP | 7.37% | 3.63% | 86.77% | 69.93% |
| 50% RPI, 50% SMP | 5.5% | 5.5% | 90.71% | 60.85% |
| 33% RPI, 67% SMP | 3.63% | 7.37% | 93.43% | 51.78% |
| 6.7% RPI, 93.3% SMP | 0.737% | 10.263% | 39.57% | 37.26% |
| 100% SMP | 0 | 11% | 33.63% | 33.63% |

**Claims**

1. A foam comprising:

     i) 80 to 95 wt.% of water, and
     ii) 1 to 20 wt.% native rapeseed protein isolate comprising 40 to 65 wt.% cruciferins and 35 to 60 wt.% napins and having a solubility of at least 88% over a pH range from 3 to 10 at a temperature of $23\pm2°C$,
     iii) a second protein selected from the group consisting of whey protein, casein or milk protein, isolates of any thereof, concentrates of any thereof and combinations of any thereof, wherein the ratio between said rapeseed protein isolate and said second protein is from 95:5 (w:w) to 5:95 (w:w),

     wherein i) + ii) + iii) add up to 100 wt.% or less.

2. A foam according to claim 1 wherein the native rapeseed protein isolate has a protein content of at least 90 wt.% on a dry weight basis and a solubility of at least 90% over a pH range from 3 to 10 at a temperature of $23\pm2°C$.

3. A foam according to any one of the preceding claims wherein the native rapeseed protein isolate in an aqueous 2 wt.% solution has a conductivity of less than 9000 µS/cm over a pH range of 2 to 12 measured using a Hach senslON+ EC71 conductivity meter.

4. A foam according to any one of the preceding claims wherein the native rapeseed protein isolate has a phytate level less than 0.4 wt.%.

5. A foam according to any one of the preceding claims wherein said protein mentioned under iii) is whey protein or milk protein.

6. A foam according to claim 5 wherein the ratio between said rapeseed protein isolate and said second protein is from 93.3:6.7 (w:w) to 6.7:93.3 (w:w).

7. A foam according to claim 5 wherein the ratio between said rapeseed protein isolate and said second protein is from 50:50 (w:w) to 6.7:93.3 (w:w).

8. A process for obtaining a foam comprising:

     i) 80 to 95 wt.% of water, and
     ii) 1 to 20 wt.% native rapeseed protein isolate comprising 40 to 65 wt.% cruciferins and 35 to 60 wt.% napins and having a solubility of at least 88% over a pH range from 3 to 10 at a temperature of $23\pm2°C$,
     iii) a second protein selected from the group consisting of whey protein, casein or milk protein, isolates of any thereof, concentrates of any thereof and combinations of any thereof, wherein the ratio between said rapeseed protein isolate and said second protein is from 95:5 (w:w) to 5:95 (w:w),

     wherein i) + ii) + iii) add up to 100 wt.% or less comprising:

     a) mixing the rapeseed protein isolate with water to form a paste;
     b) adding water to the paste obtained in step a);
     c) adding before, after or during step b) a second protein selected from the group consisting of whey protein, casein or milk protein, isolates of any thereof, concentrates of any thereof and combinations of any thereof,
     d) whipping the mixture obtained in step c) into a foam.

9. A process according to claim 8 wherein after step c) the pH is adjusted to neutral.

10. Use of a foam according to anyone of claims 1 to 7 in a food product.

**Patentansprüche**

1. Schaum, umfassend:

i) 80 bis 95 Gew.% Wasser, und

ii) 1 bis 20 Gew.% natives Rapssamenproteinisolat, umfassend 40 bis 65 Gew.% Cruciferine und 35 bis 60 Gew.% Napine und mit einer Löslichkeit von mindestens 88 % über einen pH-Wertbereich von 3 bis 10 bei einer Temperatur von 23 ± 2 °C,

iii) ein zweites Protein ausgewählt aus der Gruppe bestehend aus Molkenprotein, Casein oder Milchprotein, Isolaten von beliebigen davon, Konzentraten von beliebigen davon und Kombinationen von beliebigen davon, wobei das Verhältnis zwischen dem Rapssamenproteinisolat und dem zweiten Protein 95:5 (Gew.:Gew.) bis 5:95 (Gew.:Gew.) beträgt,

wobei i) + ii) + iii) in der Summe 100 Gew.% oder weniger ergeben.

2. Schaum nach Anspruch 1, wobei das native Rapsproteinisolat einen Proteingehalt von mindestens 90 Gew.% auf Trockengewichtsbasis und eine Löslichkeit von mindestens 90 % über einen pH-Wertbereich von 3 bis 10 bei einer Temperatur von 23 ± 2 °C aufweist.

3. Schaum nach einem der vorhergehenden Ansprüche, wobei das native Rapssamenproteinisolat in einer wässrigen 2 Gew.% Lösung eine Leitfähigkeit von weniger als 9000 µS/cm über einen pH-Wertbereich von 2 bis 12 aufweist, gemessen mit einem Hach sensION+ EC71 Leitfähigkeitsmessgerät.

4. Schaum nach einem der vorhergehenden Ansprüche, wobei das native Rapssamenproteinisolat ein Phytatniveau kleiner als 0,4 Gew.% aufweist.

5. Schaum nach einem der vorhergehenden Ansprüche, wobei das unter iii) genannte Protein Molkenprotein oder Milchprotein ist.

6. Schaum nach Anspruch 5, wobei das Verhältnis zwischen Rapssamenproteinisolat und dem zweiten Protein 93,3:6,7 (Gew.:Gew.) bis 6,7:93,3 (Gew.:Gew.) beträgt.

7. Schaum nach Anspruch 5, wobei das Verhältnis zwischen Rapssamenproteinisolat und dem zweiten Protein 50:50 (Gew.:Gew.) bis 6,7:93,3 (Gew.:Gew.) beträgt.

8. Verfahren zum Erhalten eines Schaums, umfassend:

i) 80 bis 95 Gew.% Wasser, und

ii) 1 bis 20 Gew.% natives Rapssamenproteinisolat, umfassend 40 bis 65 Gew.% Cruciferine und 35 bis 60 Gew.% Napine und mit einer Löslichkeit von mindestens 88 % über einen pH-Wertbereich von 3 bis 10 bei einer Temperatur von 23 ± 2 °C,

iii) ein zweites Protein ausgewählt aus der Gruppe bestehend aus Molkenprotein, Casein oder Milchprotein, Isolaten von beliebigen davon, Konzentraten von beliebigen davon und Kombinationen von beliebigen davon, wobei das Verhältnis zwischen dem Rapssamenproteinisolat und dem zweiten Protein 95:5 (Gew.:Gew.) bis 5:95 (Gew.:Gew.) beträgt,

wobei i) + ii) + iii) in der Summe 100 Gew.% oder weniger ergeben, umfassend:

a) Mischen des Rapssamenproteinisolats mit Wasser, um eine Paste zu bilden;
b) Zugeben von Wasser zu der in Schritt a) erhaltenen Paste;
c) Zugeben eines zweiten Proteins ausgewählt aus der Gruppe bestehend aus Molkenprotein, Casein oder Milchprotein, Isolaten von jedweden davon, Konzentraten von jedweden davon und Kombinationen von jedweden davon vor, nach oder während Schritt b),
d) Aufschlagen der in c) erhaltenen Mischung zu einem Schaum.

9. Verfahren nach Anspruch 8, wobei der pH-Wert nach Schritt c) auf neutral eingestellt wird.

10. Verwendung eines Schaums nach jedwedem der Ansprüche 1 bis 7 in einem Nahrungsmittelprodukt.

**Revendications**

1. Mousse comprenant :

    i) 80 à 95 % en poids d'eau, et
    ii) 1 à 20 % en poids d'isolat de protéines de colza natives comprenant 40 à 65 % en poids de cruciférines et 35 à 60 % en poids de napines et possédant une solubilité d'au moins 88 % sur une plage de pH de 3 à 10 à une température de 23 ± 2 °C,
    iii) une deuxième protéine choisie dans le groupe constitué par une protéine de lactosérum, une caséine ou une protéine de lait, des isolats de quelconques parmi celles-ci, des concentrés de quelconques parmi celles-ci et des combinaisons de quelconques parmi celles-ci, le rapport entre ledit isolat de protéines de colza et ladite deuxième protéine étant de 95 : 5 (p : p) à 5 : 95 (p : p),
    i) + ii) + iii) totalisant 100 % en poids ou moins.

2. Mousse selon la revendication 1, l'isolat de protéines de colza natives possédant une teneur en protéines d'au moins 90 % en poids sur une base de poids sec et une solubilité d'au moins 90 % sur une plage de pH de 3 à 10 à une température de 23 ± 2 °C.

3. Mousse selon l'une quelconque des revendications précédentes, l'isolat de protéines de colza natives dans une solution aqueuse à 2 % en poids possédant une conductivité inférieure à 9 000 μS/cm sur une plage de pH de 2 à 12 mesurée en utilisant un conductimètre Hach sensION+ EC71.

4. Mousse selon l'une quelconque des revendications précédentes, l'isolat de protéines de colza natives possédant un taux de phytate inférieur à 0,4 % en poids.

5. Mousse selon l'une quelconque des revendications précédentes, ladite protéine mentionnée en iii) étant une protéine de lactosérum ou une protéine de lait.

6. Mousse selon la revendication 5, le rapport entre ledit isolat de protéines de colza et ladite deuxième protéine étant de 93,3 : 6, 7 (p : p) à 6, 7 : 93,3 (p : p).

7. Mousse selon la revendication 5, le rapport entre ledit isolat de protéines de colza et ladite deuxième protéine étant de 50 : 50 (p : p) à 6,7 : 93,3 (p : p).

8. Procédé pour l'obtention d'une mousse comprenant :

    i) 80 à 95 % en poids d'eau, et
    ii) 1 à 20 % en poids d'isolat de protéines de colza natives comprenant 40 à 65 % en poids de cruciférines et 35 à 60 % en poids de napines et possédant une solubilité d'au moins 88 % sur une plage de pH de 3 à 10 à une température de 23 ± 2 °C,
    iii) une deuxième protéine choisie dans le groupe constitué par une protéine de lactosérum, une caséine ou une protéine de lait, des isolats de quelconques parmi celles-ci, des concentrés de quelconques parmi celles-ci et des combinaisons de quelconques parmi celles-ci, le rapport entre ledit isolat de protéines de colza et ladite deuxième protéine étant de 95 : 5 (p : p) à 5 : 95 (p : p),

    i) + ii) + iii) totalisant 100 % en poids ou moins comprenant :

    a) le mélange de l'isolat de protéines de colza avec de l'eau pour former une pâte ;
    b) l'ajout d'eau à la pâte obtenue dans l'étape a) ;
    c) l'ajout avant, après ou pendant l'étape b) d'une deuxième protéine choisie dans le groupe constitué par une protéine de lactosérum, une caséine ou une protéine de lait, des isolats de quelconques parmi celles-ci, des concentrés de quelconques parmi celles-ci et des combinaisons de quelconques parmi celles-ci,
    d) le fouettage du mélange obtenu dans l'étape c) en une mousse.

9. Procédé selon la revendication 8 dans lequel après l'étape c) le pH est ajusté jusqu'à neutralité.

10. Utilisation d'une mousse selon l'une quelconque des revendications 1 à 7 dans un produit alimentaire.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008094434 A
- EP 1715752 B1
- US 20070098876 A
- US 2017027190 A
- EP 1389921 B1
- WO 2017102535 A
- WO 2011057408 A

**Non-patent literature cited in the description**

- **SCHWENKE ; LINOW.** *Nahrung,* 1982, vol. 26, K5-K6
- **JANITHA et al.** *OCL,* 2016, vol. 23, D407
- **KODAGODA et al.** *Can. Inst. Food Sci. Technol. J.,* 1973, vol. 6, 266-269
- **KODAGODA et al.** *Can. Inst. Food Sci. Technol. J.,* 1973, vol. 6, 135-141
- **PUDEL et al.** *Lipid Technology,* 2015, vol. 27, 112-114
- **MORR et al.** *J. Food Sci.,* 1985, vol. 50, 1715-1718
- **KROLL.** *Die Nahrung,* 1991, vol. 35, 619-624